# EUROPÄISCHE PATENTSCHRIFT

(11) **EP 2 529 460 B1**
(45) Veröffentlichungstag und Bekanntmachung des Hinweises auf die Patenterteilung: **19.06.2019**
(21) Anmeldenummer: 11708781.7
(22) Anmeldetag: 08.03.2011
(51) Int. Cl.: H02J 3/14, H02J 13/00

(54) **STROMVERSORGUNGSMODUL**
POWER SUPPLY MODULE
MODULE D'ALIMENTATION ÉLECTRIQUE

(30) Priorität: 26.04.2010 DE 102010018292
(43) Veröffentlichungstag der Anmeldung: 05.12.2012
(73) Patentinhaber: Siemens Aktiengesellschaft, 80333 München (DE)
(72) Erfinder: FALK, Rainer, 85586 Poing (DE); FRIES, Steffen, 85598 Baldham (DE)
(86) Internationale Anmeldenummer: PCT/EP2011/053421
(87) Internationale Veröffentlichungsnummer: WO 2011/134709

(56) Entgegenhaltungen:
- EP-A1- 0 466 152
- WO-A1-2006/066991

## Beschreibung

Die Erfindung betrifft ein Stromversorgungsmodul zur Stromversorgung und Steuerung oder Überwachung von elektrischen Geräten sowie ein entsprechendes Verfahren.

WO 2006/066991 A1 offenbart eine Initialisierung bzw. Registrierung für ein elektrisches Hausgerät. Um an dem Hausgerät eine Adresse einzustellen, wird nach Betätigen einer Schalteinrichtung prüft das Hausgerät, ob gerade eine geeignete Hausadresse gesendet wird. Andernfalls wird die Erzeugung einer neuen Adresse veranlasst.

EP 0466152 A1 betrifft eine Vorrichtung zur Steuerung mehrerer elektrischer Sende-Empfänger. Zur Adresszuteilung überwacht ein Suchprogramm in einem Netz umlaufende Informationen.

Elektrische Geräte werden herkömmlicher Weise über eine Stromleitung mit einem Versorgungsstrom versorgt. Dazu wird ein an dem elektrischen Gerät angebrachter elektrischer Stecker in eine Stromsteckdose eingesteckt, die über einen Versorgungsstromkreis an einen Stromversorgungsanschluss eines Stromversorgungsmoduls angeschlossen ist, das sich beispielsweise in einem Sicherungskasten eines Haushaltes befindet. Elektrische Geräte können zunehmend auch digital gesteuert und überwacht werden. Zur Steuerung und Überwachung des elektrischen Gerätes tauscht dabei das elektrische Gerät Steuerdaten über eine Kommunikationsverbindung mit einer entfernt gelegenen Steuerung aus. Bei einer derartigen Kommunikation wird das elektrische Gerät oder einzelne Komponenten des Gerätes durch eine zugehörige digitale Identität identifiziert, beispielsweise eine MAC-Adresse, eine Geräte-ID oder eine IP-Adresse. Die Zuordnung von logischen Steuerungsaufgaben bzw. Überwachungsaufgaben erfolgt dabei herkömmlicher Weise über eine logische Zuordnung zu der jeweiligen Gerätekomponente bzw. zu dem jeweiligen Gerät. Dieses Einrichten einer logischen Zuordnung bei herkömmlichen elektrischen Systemen ist relativ aufwändig, insbesondere wenn dabei auf Basis einer Geräte-ID das jeweilige Gerät ausgewählt werden muss.

Es ist daher eine Aufgabe der vorliegenden Erfindung eine Vorrichtung und ein Verfahren zum Steuern oder Überwachen von elektrischen Geräten zu schaffen, bei der eine derartige Zuordnung einfach und für einen Nutzer intuitiv durchführbar ist.

Diese Aufgabe wird erfindungsgemäß durch ein Verfahren bzw. Vorrichtungen mit den Merkmalen der unabhängigen Patentansprüche gelöst.

Bei einer möglichen Ausführungsform des erfindungsgemäßen Verfahrens wird die detektierte Parameteränderung durch das in die Stromsteckdose des Versorgungsstromkreises eingesteckte elektrische Gerät selbst hervorgerufen.

Bei einer weiteren möglichen Ausführungsform des erfindungsgemäßen Verfahrens wird die detektierte Parameteränderung oder das Identifizierungssignal durch einen in die Stromsteckdose des Versorgungsstromkreises eingesteckten Kodierstecker hervorgerufen.

Bei einer Ausführungsform des erfindungsgemäßen Verfahrens wird eine Innenwiderstandsänderung oder eine Stromverbrauchsänderung an den Stromversorgungsanschluss des Stromversorgungsmoduls durch Ein- oder Ausschaltvorgänge eines an dem elektrischen Gerät angebrachten Stromschalters hervorgerufen.

Bei einer weiteren möglichen Ausführungsform des erfindungsgemäßen Verfahrens wird eine Innenwiderstandsänderung oder eine Stromverbrauchsänderung an dem Stromversorgungsanschluss des Stromversorgungsmoduls durch Ein- bzw. Ausstecken des elektrischen Gerätes in die Stromsteckdose des Versorgungsstromkreises hervorgerufen.

Bei einer möglichen Ausführungsform erfolgt das Ein-/Ausschalten des elektrischen Gerätes bzw. das Ein- oder Ausstecken des elektrischen Gerätes mehrfach in einem bestimmten Zeitraum.

Bei einer möglichen Ausführungsform des erfindungsgemäßen Verfahrens erfolgt das Identifizieren der Stromsteckdose und das Zuordnen der logischen Adresse der identifizierten Stromsteckdose zu dem Stromversorgungsanschluss des Stromversorgungsmoduls in einem Adressanlernbetriebsmodus des Stromversorgungsmoduls.

Bei einer möglichen Ausführungsform des erfindungsgemäßen Verfahrens erfolgt das Steuern und/oder Überwachen des an die identifizierte Stromsteckdose angeschlossenen elektrischen Geräts in einem normalen Betriebsmodus des Stromversorgungsmoduls.

Bei dieser Ausführungsform ist das Stromversorgungsmodul zwischen dem Adressanlernbetriebsmodus und dem normalen Betriebsmodus umschaltbar. Dieses Umschalten erfolgt beispielsweise in Reaktion auf einen Nutzerbefehl.

Bei einer möglichen Ausführungsform des erfindungsgemäßen Stromversorgungsmoduls geht das Stromversorgungsmodul von einem normalen Betriebsmodus in den Adressanlernbetriebsmodus über, falls eine entsprechende Nutzereingabe erfolgt oder ein entsprechender Steuerbefehl durch das Stromversorgungsmodul empfangen wird.

Bei einer möglichen Ausführungsform des erfindungsgemäßen Stromversorgungsmoduls geht das Stromversorgungsmodul von dem Adressanlernbetriebsmodus in den normalen Betriebsmodus über, falls eine vorgegebene Zeitspanne in dem Adressanlernbetriebsmodus verstrichen ist.

Bei einer weiteren möglichen Ausführungsform des erfindungsgemäßen Stromversorgungsmoduls geht das Stromversorgungsmodul von dem Adressanlernbetriebsmodus in den normalen Betriebsmodus über, falls eine logische Adresse einer Stromsteckdose einem Stromversorgungsanschluss des Stromversorgungsmoduls zugeordnet worden ist.

Bei einer weiteren möglichen Ausführungsform des erfindungsgemäßen Stromversorgungsmoduls geht das Stromversorgungsmodul von dem Adressanlernbetriebsmodus in den normalen Betriebsmodus über, falls eine entsprechende Nutzereingabe erfolgt oder entsprechender Steuerbefehl durch das Stromversorgungsmodul empfangen wird.

Bei einer Ausführungsform des erfindungsgemäßen Stromversorgungsmoduls erfolgt die Steuerung oder Überwachung des an die identifizierte Stromsteckdose angeschlossenen elektrischen Gerätes über den Versorgungsstromkreis der identifizierten Stromsteckdose.

Bei einer alternativen Ausführungsform des erfindungsgemäßen Stromversorgungsmoduls erfolgt die Steuerung oder Überwachung des an die identifizierte Stromsteckdose angeschlossenen elektrischen Gerätes über ein separates Datennetzwerk, über welches die identifizierte Stromsteckdose des elektrischen Gerätes mit dem Stromversorgungsmodul kommuniziert.

Bei diesem Datennetzwerk kann es sich um ein drahtloses oder um ein drahtgebundenes Datennetzwerk handeln.

Die Erfindung schafft einen Kodierstecker, der in eine Stromsteckdose einsteckbar ist,
wobei mittels des Kodiersteckers in einem Versorgungsstromkreis, über welchen die Stromsteckdose an einem Stromversorgungsanschluss eines Stromversorgungsmoduls angeschlossen ist, eine gezielte Parameteränderung eines messbaren Parameters hervorgerufen wird, die durch eine Messeinrichtung des Stromversorgungsmoduls zur Identifizierung der Stromsteckdose detektierbar ist,
wobei eine logische Adresse der identifizierten Stromsteckdose dem jeweiligen Stromversorgungsanschluss, an welchem die Parameteränderung detektiert wird, zugeordnet wird.

Die Erfindung schafft eine Stromsteckdose für ein darin einsteckbares elektrisches Gerät,
wobei die Stromsteckdose über einen Versorgungsstromkreis an einen Stromversorgungsanschluss eines Stromversorgungsmoduls angeschlossen ist, und wobei die Stromsteckdose anhand einer in den Stromversorgungsstromkreis hervorgerufenen Parameteränderung durch eine Messeinrichtung des Stromversorgungsmoduls identifizierbar ist.

Bei einer möglichen Ausführungsform der erfindungsgemäßen Stromsteckdose weist diese Stromsteckdose ein Funkmodul auf, über das die identifizierte Stromsteckdose durch das Stromversorgungsmodul drahtlos steuerbar oder überwachbar ist.

Bei diesem Datennetzwerk kann es sich um ein drahtloses oder um ein drahtgebundenes Datennetzwerk handeln.

Ein Kodierstecker kann in eine Stromsteckdose einsteckbar sein,
wobei mittels des Kodiersteckers in einem
Versorgungsstromkreis, über welchen die Stromsteckdose an einem Stromversorgungsanschluss eines Stromversorgungsmoduls angeschlossen ist, eine gezielte Parameteränderung eines messbaren Parameters hervorgerufen wird, die durch eine Messeinrichtung des Stromversorgungsmoduls zur Identifizierung der Stromsteckdose detektierbar ist,
wobei eine logische Adresse der identifizierten Stromsteckdose dem jeweiligen Stromversorgungsanschluss, an welchem die Parameteränderung detektiert wird, zugeordnet wird.

Die Erfindung schafft ferner eine Stromsteckdose mit den in Patentanspruch 8 angegebenen Merkmalen.

Die Erfindung schafft eine Stromsteckdose für ein darin einsteckbares elektrisches Gerät,
wobei die Stromsteckdose über einen Versorgungsstromkreis an einen Stromversorgungsanschluss eines Stromversorgungsmoduls angeschlossen ist, und wobei die Stromsteckdose anhand einer in den Stromversorgungsstromkreis hervorgerufenen Parameteränderung durch eine Messeinrichtung des Stromversorgungsmoduls identifizierbar ist.

Bei einer möglichen Ausführungsform der erfindungsgemäßen Stromsteckdose weist diese Stromsteckdose ein Funkmodul auf, über das die identifizierte Stromsteckdose durch das Stromversorgungsmodul drahtlos steuerbar oder überwachbar ist.

Bei einer alternativen Ausführungsform der erfindungsgemäßen Stromsteckdose weist diese Stromsteckdose eine Schnittstelle für ein drahtgebundenes Datennetzwerk auf, über welches die identifizierte Stromsteckdose durch das Stromversorgungsmodul steuerbar oder überwachbar ist.

Bei einer weiteren möglichen Ausführungsform der erfindungsgemäßen Stromsteckdose ist die identifizierte Stromsteckdose über den Versorgungsstromkreis mittels Powerline-Communication PLC durch das Stromversorgungsmodul steuerbar oder überwachbar.

Im Weiteren werden bevorzugte Ausführungsformen des erfindungsgemäßen Stromversorgungsmoduls zur Steuerung oder Überwachung von mindestens einem elektrischen Gerät sowie ein entsprechendes Verfahren zum Steuern oder Überwachen eines elektrischen Gerätes, eines erfindungsgemäßen Kodiersteckers zur Identifizierung einer Stromsteckdose sowie eine entsprechende Stromsteckdose unter Bezugnahme auf die beigefügten Figuren beschrieben.

Es zeigen:
- Fig. 1: ein Ablaufdiagramm zur Darstellung einer möglichen Ausführungsform des erfindungsgemäßen Verfahrens;
- Fig. 2: ein Blockschaltbild eines Ausführungsbeispiels eines erfindungsgemäßen Stromversorgungsmoduls;
- Fig. 3: ein Blockschaltbild zur Darstellung eines weiteren Ausführungsbeispiels des erfindungsgemäßen Stromversorgungsmoduls;
- Fig. 4A, 4B, 4C: Ausführungsbeispiele des erfindungsgemäßen Stromversorgungsmoduls, wobei ein elektrisches Gerät mittels Powerline-Communication steuerbar oder überwachbar ist;
- Fig. 5: ein Ausführungsbeispiel einer erfindungsgemäßen Stromsteckdose;
- Fig. 6: ein Ausführungsbeispiel eines erfindungsgemäßen Kodiersteckers zur Identifizierung einer Stromsteckdose.

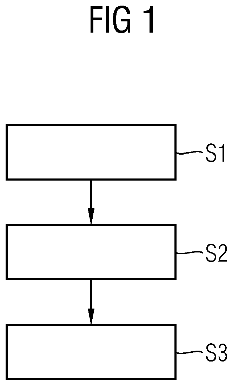

Wie man aus Fig. 1 erkennen kann, umfasst das erfindungsgemäße Verfahren zum Steuern oder Überwachen eines elektrischen Gerätes, das zu seiner Stromversorgung in eine Stromsteckdose einsteckbar ist, die über einen Versorgungsstromkreis an einen Stromversorgungsanschluss eines Stromversorgungsmoduls angeschlossen ist, im Wesentlichen drei Schritte.

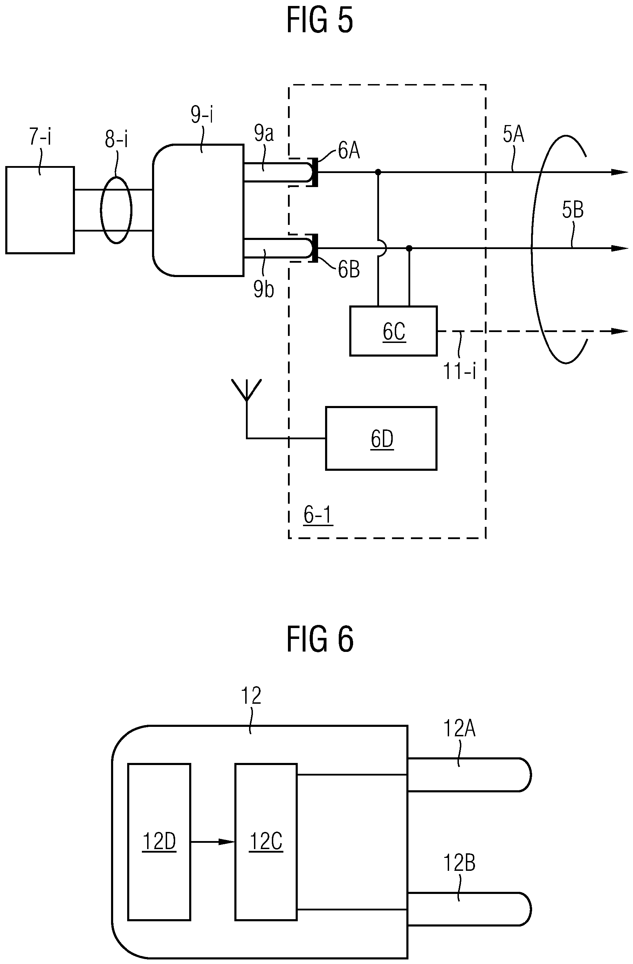

In einem ersten Schritt S1 wird die für das elektrische Gerät genutzte Stromsteckdose identifiziert. Dies kann bei einer möglichen Ausführungsform anhand einer an dem Stromversorgungsanschluss des Stromsversorgungsmoduls detektierten Parameteränderung erfolgen. Diese Parameteränderung ist beispielsweise eine detektierbare Innenwiderstandsänderung oder eine Stromverbrauchsänderung, die an dem Stromversorgungsanschluss des Stromversorgungsmoduls auftreten. Das Stromversorgungsmodul kann sich beispielsweise in einem Sicherungskasten eines Haushaltes befinden. Die detektierte Parameteränderung wird bei einer möglichen Ausführungsform durch das in den Versorgungsstromkreis eingesteckte elektrische Gerät selbst hervorgerufen. Bei einer möglichen Ausführungsform wird die detektierbare Parameteränderung durch einen in die Stromsteckdose des Versorgungsstromkreises eingesteckten Kodier- bzw. Identifiziersteckers hervorgerufen. Fig. 6 zeigt ein Ausführungsbeispiel eines derartigen Kodiersteckers.

Eine Innenwiderstandsänderung, die an dem Stromversorgungsanschluss des Stromversorgungsmoduls auftritt, kann auf unterschiedliche Weise hervorgerufen werden. Bei einer möglichen Ausführungsform wird die Innenwiderstandsänderung durch Ein- und Ausschaltvorgänge eines an dem elektrischen Gerät angebrachten Stromschalters hervorgerufen. Dabei kann beispielsweise durch einen Nutzer ein Stromschalter mehrfach betätigt werden, beispielsweise durch dreifaches Ein- oder Ausschalten innerhalb von 10 Sekunden. Hierdurch wird an dem Stromversorgungsanschluss des Stromversorgungsmoduls ein entsprechender Verlauf des Innenwiderstandes des Stromversorgungsanschlusses erfasst, beispielsweise durch eine integrierte Messeinrichtung.

Bei einer weiteren möglichen Ausführungsform wird eine Innenwiderstandsänderung oder Stromverbrauchsänderung in dem Stromversorgungsanschluss des Stromversorgungsmoduls durch Ein- bzw. Ausstecken des jeweiligen elektrischen Gerätes in die Stromsteckdose des Versorgungsstromkreises hervorgerufen. Beispielsweise kann ein Nutzer ein elektrisches Gerät, welches einen bestimmten Ausgangswiderstand aufweist, mehrfach in eine Stromsteckdose ein- und dann wieder ausstecken. Beispielsweise kann ein Nutzer ein elektrisches Gerät innerhalb eines Zeitraums von 10 Sekunden dreimal in eine Steckdose ein- und wieder ausstecken. Ein entsprechendes Muster der Innenwiderstands- bzw. Stromverbrauchsänderung kann an den Stromversorgungsanschluss des Stromversorgungsmoduls mit einer Messeinrichtung detektiert werden.

Das Identifizieren der durch das elektrische Gerät genutzten Stromsteckdose im Schritt S1 erfolgt vorzugsweise in einem Adressanlernbetriebsmodus des Stromversorgungsmoduls.

Bei einer alternativen Ausführungsform des erfindungsgemäßen Verfahrens erfolgt das Identifizieren der für das elektrische Gerät genutzten Stromsteckdose nicht anhand einer detektierten Parameteränderung, sondern anhand eines Identifizierungssignals. Dieses Identifizierungssignal kann über eine zu dem Versorgungsstromkreis zugehörige Signalisierungsleitung von der Stromsteckdose zu dem Stromversorgungsanschluss des Stromversorgungsmoduls übertragen werden. Hierzu ist es notwendig, dass parallel zu den Stromversorgungsleitungen eine entsprechende Signalisierungsleitung, beispielsweise in einer Wand eines Gebäudes, verlegt ist.

In einem weiteren Schritt S2 wird dem jeweiligen Stromversorgungsanschluss des Stromversorgungsmoduls eine logische Adresse der identifizierten Stromsteckdose zugeordnet. Das Zuordnen der logischen Adresse der identifizierten Stromsteckdose zu dem Stromversorgungsanschluss des Stromversorgungsmoduls erfolgt vorzugsweise ebenfalls in dem Adressanlernbetriebsmodus des Stromversorgungsmoduls.

In einem weiteren Schritt S3 wird das an der identifizierten Stromsteckdose angeschlossene elektrische Gerät anhand der zugeordneten logischen Adresse der identifizierten Stromsteckdose gesteuert oder überwacht. Diese Steuerung oder Überwachung erfolgt beispielsweise durch eine in dem Stromversorgungsmodul enthaltene Steuerschaltung. Das Steuern bzw. Überwachen des an die identifizierte Stromsteckdose angeschlossenen elektrischen Gerätes erfolgt beispielsweise in einem normalen Betriebsmodus des Stromversorgungsmoduls, in welchen das Stromversorgungsmodul aus dem Adressanlernbetriebsmodus wechselt. Das Stromversorgungsmodul ist vorzugsweise zwischen einem Adressanlernbetriebsmodus und einem normalen Betriebmodus umschaltbar. Das Umschalten zwischen den beiden Betriebsmodi kann beispielsweise durch eine entsprechende Nutzereingabe über eine Nutzer-Schnittstelle des Stromversorgungsmoduls bewirkt werden oder durch einen entsprechenden Steuerbefehl, der durch das Stromversorgungsmodul von einer externen Steuerung empfangen wird.

Bei einer möglichen Ausführungsform geht das Stromversorgungsmodul von dem Adressanlernbetriebsmodus in den normalen Betriebsmodus über, falls eine vorgegebene Zeitspanne in dem Adressanlernbetriebsmodus verstrichen ist, beispielsweise nach 30 Sekunden. Weiterhin ist es möglich, dass das Stromversorgungsmodul automatisch von dem Adressanlernbetriebsmodus in den normalen Betriebsmodus übergeht, falls eine logische Adresse einer Stromsteckdose einem Stromversorgungsanschluss des Stromversorgungsmoduls zugeordnet worden ist.

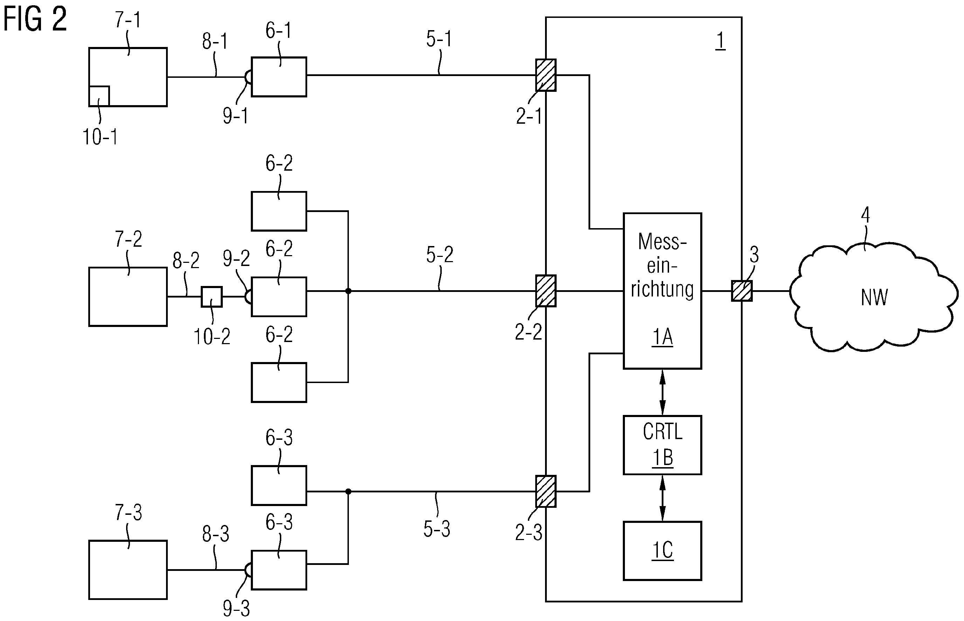

Fig. 2 zeigt ein Blockschaltbild zur Darstellung eines möglichen Ausführungsbeispiels eines erfindungsgemäßen Stromversorgungsmoduls 1. Das Stromversorgungsmodul 1 kann sich beispielsweise in einem Sicherungskasten eines Haushaltes befinden. Das Stromversorgungsmodul 1 weist mehrere Stromversorgungsanschlüsse 2-1, 2-2, 2-3 auf. Darüber hinaus ist das Stromversorgungsmodul 1 an einem Anschluss 3 mit einem Versorgungsstromnetzwerk 4 verbunden. Dieses Versorgungsstromnetzwerk 4 liefert beispielsweise einen Versorgungswechselstrom AC oder einen Versorgungsgleichstrom DC. Bei jedem Stromversorgungsanschluss 2-i des Stromversorgungsmoduls 1 kann ein Versorgungsstromkreis 5-i vorgesehen sein. Bei dem in Fig. 2 dargestellten Ausführungsbeispiel ist an die drei Stromversorgungsanschlüsse 2-1, 2-2, 2-3 jeweils ein Versorgungsstromkreis 5-1, 5-2, 5-3 vorgesehen, die zum Beispiel in der Wand eines Gebäudes installiert bzw. verlegt sind. Jeder Versorgungsstromkreis 5-i kann über eine oder mehrere Stromsteckdosen 6-i verfügen. Dabei weist der erste Versorgungsstromkreis 5-1 bei dem in Fig. 2 dargestellten Ausführungsbeispiel eine Stromsteckdose 6-1 auf, während der zweite Versorgungsstromkreis 5-2 drei Stromsteckdosen 6-2 besitzt und der dritte Versorgungsstromkreis 5-3 wiederum zwei Stromsteckdosen 6-3 hat.

Bei dem in Fig. 2 dargestellten Ausführungsbeispiel ist an die einzige Stromsteckdose 6-1 des ersten Versorgungsstromkreises ein elektrisches Gerät 7-1 über ein Stromversorgungskabel 8-1 und einen Stromstecker 9-1 angeschlossen. Weiterhin ist in dem in Fig. 2 dargestellten Ausführungsbeispiel ein zweites elektrisches Gerät 7-2 über ein Stromversorgungskabel 8-2 und einen Stecker 9-2 an die mittlere Stromsteckdose 6-2 des zweiten Versorgungsstromkreises 5-2 angeschlossen. Weiterhin ist in dem in Fig. 2 dargestellten Ausführungsbeispiel ein drittes elektrisches Gerät 7-3 über ein Stromversorgungskabel 8-3 und einen elektrischen Stecker 9-3 in die untere Steckdose 6-3 des dritten Versorgungsstromkreises 5-3 eingesteckt.

Bei den verschiedenen elektrischen Geräten 7-1, 7-2, 7-3 kann es sich um beliebige Elektrogeräte oder Maschinen handeln, beispielsweise Haushaltsgeräte eines Privathaushaltes, zum Beispiel eine Waschmaschine, ein TV-Gerät, eine Lampe oder ein Computer. Weiterhin kann es sich bei den elektrischen Geräten 7-1, 7-2, 7-3 beispielsweise auch um Maschinen einer Produktionsanlage handeln.

Bei dem in Fig. 2 dargestellten Ausführungsbeispiel verfügt das erste elektrische Gerät 7-1 über einen Schalter oder Taster 10-1 durch dessen Betätigung eine Parameteränderung an dem Stromversorgungsanschluss 2-1 des entsprechenden Versorgungsstromkreises 5-1 bei dem Stromversorgungsmodul 1 hervorruft. Beispielsweise kann durch Betätigen des Schalters 10-1 ein Ausgangswiderstand des elektrischen Gerätes 7-1 verändert werden, der eine Widerstandsänderung an dem Stromversorgungsanschluss 2-1 führt.

Weiterhin besitzt in dem in Fig. 2 dargestellten Ausführungsbeispiel das zweite elektrische Gerät 7-2 an seinem Stromversorgungskabel 8-2 einen elektrischen Schalter 10-2 über den das elektrische Gerät 7-2 an- oder ausschaltbar ist. Diese An-/Ausschaltvorgänge des elektrischen Gerätes 7-2 sind bei dem dargestellten Ausführungsbeispiel an dem Stromversorgungsanschluss 2-2 des Stromversorgungsmoduls 1 detektierbar.

Bei dem in Fig. 2 dargestellten Ausführungsbeispiel verfügt das dritte elektrische Gerät 7-3 weder über einen elektrischen Schalter noch eine entsprechende Taste zum Ein- oder Ausschalten, jedoch ist es durch Ein- oder Ausstecken des Steckers 9-3 in die entsprechende Steckdose 6-3 des Versorgungsstromkreise 5-3 möglich, eine detektierbare Parameteränderung an den Stromversorgungsanschluss 2-3 des Stromversorgungsmoduls 1 hervorzurufen.

Das Stromversorgungsmodul 1, wie es in Fig. 2 dargestellt ist, ist in der Lage beispielsweise in einem Adressanlernbetriebsmodus, eine Stromsteckdose 6-1, 6-2, 6-3 anhand einer an dem jeweiligen Stromversorgungsanschluss 2-1, 2-2, 2-3 auftretenden Parameteränderung zu identifizieren. Eine logische Adresse der identifizierten Stromsteckdose 6-i wird dann automatisch dem jeweiligen Stromversorgungsanschluss 2-i des Stromversorgungsmoduls 1 zugeordnet. Das Zuordnen erfolgt ebenfalls in einem Adressanlernbetriebsmodus des Stromversorgungsmoduls 1. Nachdem das Stromversorgungsmodul 1 in den normalen Betriebsmodus zurückgekehrt ist, erfolgt eine Steuerung oder Überwachung des in die Stromsteckdose 6-i eingesteckten elektrischen Gerätes 7-i anhand der zugeordneten logischen Adresse der identifizierten Stromsteckdose 6-i.

Bei einer bevorzugten Ausführungsform weist das Stromversorgungsmodul, wie in Fig. 2 dargestellt, eine Messeinrichtung 1A auf, welche eine Parameteränderung, insbesondere eine Innenwiderstandsänderung oder eine Stromverbrauchsänderung, die an einem der Stromversorgungsanschlüsse 2-1, 2-2, 2-3 des Stromversorgungsmoduls 1 auftritt, detektiert. Die Messeinrichtung 1A des Stromversorgungsmoduls kann an eine interne Steuerung 1B angeschlossen sein. Diese Steuerung 1B bzw. Datenverarbeitungseinheit kann Zugriff auf einen Datenspeicher 1C haben. Die Steuerung bzw. Datenverarbeitungseinheit 1B führt die Zuordnung einer logischen Adresse ADR der identifizierten Stromsteckdose 6-i anhand eines von der Messeinrichtung 1A gelieferten Messsignals zu dem jeweiligen Stromversorgungsanschluss 2-i des Stromversorgungsmoduls 1 durch. Eine entsprechende Zuordnungstabelle kann in dem Datenspeicher 1C abgelegt werden. Sobald die Zuordnung erfolgt ist, kann eine Steuerung oder Überwachung des an die identifizierte Stromsteckdose 6-i angeschlossenen elektrischen Gerätes 7-i anhand der zugeordneten gespeicherten logischen Adresse ADR der identifizierten Stromsteckdose 6-i erfolgen.

Bei einer möglichen Ausführungsform erfolgt die Steuerung oder Überwachung des an die identifizierte Stromsteckdose 6-i angeschlossenen elektrischen Gerätes 7-i über den Versorgungsstromkreis 5-i der identifizierten Stromsteckdose 6-i. Dies kann beispielsweise mittels Powerline-Communication PLC geschehen. Bei einer alternativen Ausführungsform erfolgt die Steuerung oder Überwachung des an die identifizierte Stromsteckdose 6-i angeschlossenen elektrischen Gerätes 7-i nicht über den Versorgungsstromkreis 5-i der identifizierten Stromsteckdose 6-i, sondern über ein separates Datennetzwerk, über das die identifizierte Stromsteckdose 6-i des elektrische Gerätes 7-i mit dem Stromversorgungsmodul 1 kommunizieren kann. Bei diesem separaten Datennetzwerk kann es sich um ein drahtgebundenes Datennetzwerk, aber auch um ein drahtloses Datennetzwerk handeln. Bei einer Ausführungsform weisen hierzu die Stromsteckdosen 6-i ein Funkmodul oder eine drahtgebundene Schnittstelle auf. Bei einer möglichen Ausführungsform weist jede Stromsteckdose 6-i ein Funkmodul auf, über das die identifizierte Stromsteckdose 6-i durch das Stromversorgungsmodul drahtlos steuerbar oder überwachbar ist. Bei einer weiteren möglichen Ausführungsform weist jede Stromsteckdose 6-i eine Schnittstelle für ein drahtgebundenes Datennetzwerk auf, über welches die identifizierte Stromsteckdose 6-i durch das Stromversorgungsmodul 1 steuerbar oder überwachbar ist. Beispielsweise kann dieses Datennetzwerk ein Ethernet-Netzwerk sein. Die Steuerung und Überwachung der identifizierten Stromsteckdose 6-i erfolgt vorzugsweise in einem Normalbetriebsmodus des Stromversorgungsmoduls 1.

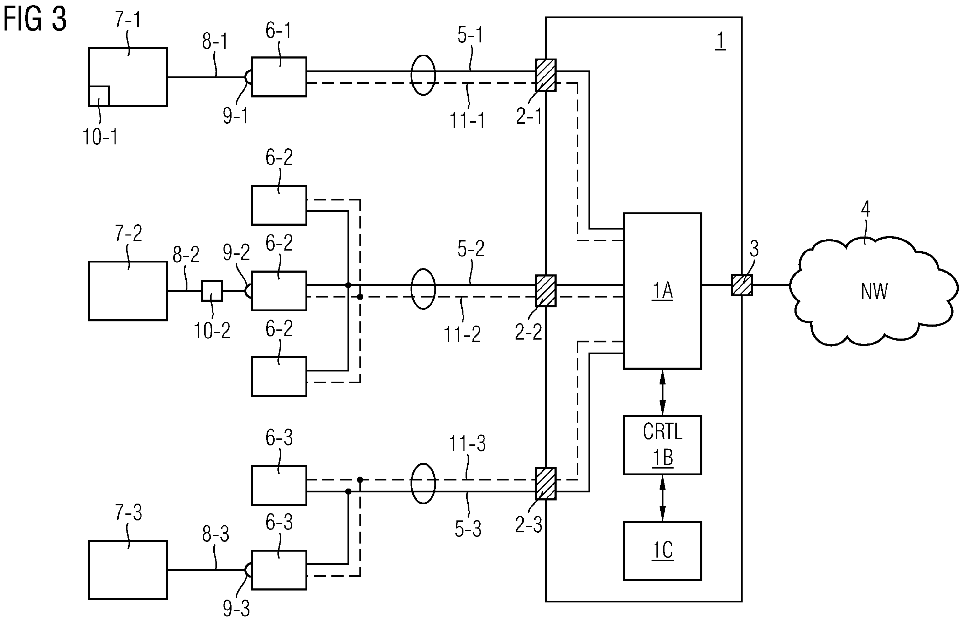

Fig. 3 zeigt ein weiteres Ausführungsbeispiel des erfindungsgemäßen Stromversorgungsmoduls 1. Bei dem in Fig. 3 dargestellten Ausführungsbeispiel ist parallel zu jedem Versorgungsstromkreis 5-i zusätzlich eine Signalisierungsleitung 11-i zwischen dem Stromversorgungsmodul 1 und den Stromsteckdosen 6-i verlegt. Bei dieser Ausführungsform kann die Identifizierung der für das elektrische Gerät 7-i genutzten Stromsteckdose 6-i anhand eines Identifizierungssignals erfolgen, welches über die zu dem Versorgungsstromkreis 5-i zugehörige Signalisierungsleitung 11-i von der Stromsteckdose 6-i zu dem Stromversorgungsanschluss 2-i des Stromversorgungsmoduls 1 übertragen wird. Ein derartiges Identifizierungssignal kann beispielsweise beim Einstecken eines Steckers 9-i an die jeweilige Stromsteckdose 6-i automatisch ausgelöst werden. Weiterhin ist es möglich, dass die Stromsteckdose 6-i jeweils eine lokale Messeinrichtung aufweist, die eine Parameteränderung an der Stromsteckdose 6-i erkennt, die durch das elektrische Gerät 7-i oder durch einen elektrischen Schalter des Gerätes 7-i hervorgerufen wird. Beispielsweise kann eine in der Stromsteckdose 6-2 vorhandene Messeinrichtung das Ein- und Ausschalten des Schalters 10-2 an dem elektrischen Gerät 7-2 detektieren und ein entsprechendes Identifizierungssignal an den Stromversorgungsanschluss 2-2 über die Signalisierungsleitung 11-2 übertragen. Weiterhin kann beispielsweise eine in der Stromsteckdose 6-1 lokal vorhandene Messeinrichtung bei Betätigen des Schalters 10-1 eine Parameteränderung, beispielsweise eine Widerstandsänderung, erfassen und ein entsprechendes Identifizierungssignal über die Signalisierungsleitung 11-1 an den Stromversorgungsanschluss 2-1 des Stromversorgungsmoduls 1 senden. Weiterhin kann eine in der Stromsteckdose 6-3 vorgesehene lokale Messeinrichtung das Ein- und Ausstecken des Steckers 9-3 in die Stromsteckdose 6-3 detektieren und ein entsprechendes Identifizierungssignal an den zugehörigen Stromversorgungsanschluss 2-3 übertragen. Die durch das Stromversorgungsmodul 1 empfangenen Identifizierungssignale können über die Messeinrichtung 1A der Steuerung 1B des Stromversorgungsmoduls 1 gemeldet werden. Anstatt einer Signalisierungsleitung 11-i kann auch eine drahtlose Signalisierungsverbindung zur Übertragung des Identifizierungssignals vorgesehen sein.

Durch das erfindungsgemäße Stromversorgungsmodul 1 können beliebige Schaltvorgänge detektiert werden. Es ist aber auch möglich, dass ein bestimmter vorgegebener Schaltvorgang zu detektieren ist, beispielsweise ein Ein-/Ausschaltvorgang, bei dem innerhalb eines festgelegten Zeitintervalls, beispielsweise 10 Sekunden, ein bestimmtes Muster an Ein- und Ausschaltvorgängen zur Detektion erfolgen muss. Vorzugsweise wird zur Identifizierung einer Stromsteckdose ein Schaltvorgang bzw. ein Schaltvorgangmuster benutzt, das in einem normalen Betrieb nicht oder nur selten auftritt, beispielsweise ein dreimaliges Ein- und Ausschalten innerhalb von 10 Sekunden.

Das erfindungsgemäße Stromversorgungsmodul 1 lässt sich bei der Gebäudeautomatisierung zur Energieverbrauchsmessung und Steuerung von elektrischen Geräten einsetzen. Dabei können verschiedene Kommunikationsprotokolle, wie beispielsweise das IP-Protokoll verwendet werden, um die Ergebnisse der Energieverbrauchsmessung an die jeweiligen Steuermodule zu liefern. Um einen Steuerungsvorgang oder einen Überwachungsvorgang dem richtigen Elektrogerät 7-i bzw. der richtigen Stromsteckdose 6-i zuzuordnen, wird bei dem erfindungsgemäßen Stromversorgungsmodul 1 dessen Adresse in dem Anlernbetriebsmodus angelernt. Hierdurch wird eine manuelle Konfiguration der Stromsteckdose 6-i vermieden, die umständlich und fehleranfällig ist. Durch die Übertragung einer Steuerinformation bzw. eines Steuerbefehls bzw. einer Energieverbrauchsinformation 7-i wird eine Adressinformation des Energieverbrauchers benötigt. Das Ermitteln und Abspeichern dieser Adressinformation stellt den Anlernvorgang dar. Zum Anlernen wird das Stromversorgungsmodul 1 in den Anlernbetriebsmodus gebracht, beispielsweise durch Betätigung eines Tasters oder Schalters. Anschließend kann eine Überwachung der Stromaufnahme mehrerer durch das Stromversorgungsmodul 1 versorgter elektrischer Geräte 7-i durchgeführt werden. Die Adressinformation desjenigen elektrischen Gerätes 7-i, bei dem beispielsweise eine Stromaufnahmeänderung oder sonstige Parameteränderung detektiert wird, wird in dem Speicher 1C gespeichert, das heißt das dieser Adressinformation zugeordnete elektrische Gerät 7-i wird angelernt. Der Anlernbetriebsmodus kann bei einer möglichen Ausführungsform nach Ablauf einer bestimmten Zeitspanne von beispielsweise 60 Sekunden beendet werden. Weiterhin kann der Anlernbetriebsmodus nach Erfassen einer Adresse ADR und deren Speicherung automatisch beendet werden. Weiterhin kann der Anlernbetriebsmodus durch Benutzerinteraktion beendet bzw. abgebrochen werden. Nach Abschluss des Anlernvorgangs bzw. nach Beendigung des Anlernbetriebsmodus und Übergang in den Normalbetriebsmodus wird eine nachfolgende Steuernachricht dann an die angelernte Adresse ADR übertragen.

Bei dem erfindungsgemäßen Verfahren wird bei einer Stromsteckdose 6-i oder einem sonstigen Energieverteiler das Tastendrucksignal "virtuell" nachgebildet. Bei einer Parameteränderung an einer Stromsteckdose 6-i wird ein virtuelles Tastendrucksignal erzeugt. Dies kann durch das angeschlossene Gerät 7-i selbst realisiert werden. Alternativ kann auch eine separate Komponente anstelle des Gerätes bzw. ein Kodierstecker 12 verwendet werden. Dieser Kodierstecker 12 kann beispielsweise einen Stromverbrauch simulieren oder einen bestimmten Schaltvorgang durchführen. Damit ist die Stromsteckdose 6-i, in der der Kodierstecker 12 eingesteckt ist, logisch adressierbar. Ein Ausführungsbeispiel eines derartigen Kodiersteckers 12 ist in Fig. 6 dargestellt. Der Kodierstecker 12 weist bei dem dargestellten Ausführungsbeispiel zwei Stromkontakte 12A, 12B auf, die in eine Stromsteckdose 6-i eingesteckt werden können. Diese sind mit einer Schaltung 12C verbunden, die eine Parameteränderung beispielsweise eine Innenwiderstandsänderung hervorruft, die detektierbar ist. Die Schaltung 12C kann bei einer möglichen Ausführungsform auch ein detektierbares Signal generieren, beispielsweise eine Impulsfolge mit einer bestimmten Dauer und mit einer bestimmten Impulsleistung. Beispielsweise kann die Schaltung 12C eine Impulsfolge mit drei Impulsen innerhalb eines Zeitraums von 10 Millisekunden bei einer Last von 20 W generieren, wobei diese Impulsfolge durch die Messeinrichtung 1A des Stromversorgungsmoduls 1 zur Identifizierung der Stromsteckdose 6-i, in welche der Kodierstecker 12 eingesteckt ist, detektiert werden kann. Die Parameter des erzeugten Signals bzw. der erzeugten Impulsfolge können beispielsweise über eine Nutzer-Schnittstelle 12D des Kodiersteckers 12 eingestellt werden. Ist der Nutzer beispielsweise ein Techniker, stellt er eine vorgegebene Impulsfolge mit bestimmten Parametern ein, die durch eine Messeinrichtung 1A des Stromversorgungsmoduls 1 zur eindeutigen Identifizierung bzw. Lokalisierung der entsprechenden Stromsteckdose 6-i, in welche der Kodierstecker 12 eingesteckt ist, detektiert wird.

Fig. 5 zeigt ein Ausführungsbeispiel einer erfindungsgemäßen Stromsteckdose 6-i. In die Stromsteckdose 6-i ist ein beliebiges elektrisches Gerät 7-i über einen Stromstecker 9-i einsteckbar. Die Stromsteckdose 6 weist entsprechende Kontakte 6A, 6B, auf die über Stromversorgungsleitungen 5A, 5B mit einem Stromversorgungsanschluss 2-i des Stromversorgungsmoduls 1 verbunden sind. Bei dem in Fig. 5 dargestellten Ausführungsbeispiel verfügt die Stromsteckdose über eine integrierte lokale Messeinrichtung 6C, die eine Parameteränderung detektiert. Diese Parameteränderung kann beispielsweise durch ein Einstecken des Steckers 9-i in die entsprechende Stromsteckdose 6-i hervorgerufen werden. Die lokale Messeinrichtung 6C kann ein entsprechendes Identifizierungssignal zur Identifizierung der Stromsteckdose 6-i über eine zugehörige Signalisierungsleitung 11-i an den Stromversorgungsanschluss des Stromversorgungsmoduls 1 übertragen. Dort wird eine logische Adresse ADR der identifizierten Stromsteckdose 6-i zu dem jeweiligen Stromversorgungsanschluss 2-i zugeordnet und anschließend die Stromsteckdose 6-i selbst oder das an die Stromsteckdose 6-i angeschlossene Gerät 7-i anhand der zugeordneten logischen Adresse ADR der identifizierten Stromsteckdose 6-i gesteuert bzw. überwacht. Bei dem in Fig. 5 dargestellten Ausführungsbeispiel ist die Stromsteckdose 6-i anhand einer in dem Versorgungsstromkreis 5-i hervorgerufenen Parameteränderung durch die in der Stromsteckdose 6-i integrierte lokale Messeinrichtung identifizierbar. Weiterhin weist die in Fig. 5 dargestellte Stromsteckdose 6-i ein Funkmodul 6D auf, über das die identifizierte Stromsteckdose 6-i durch die Steuerung 1B des Stromversorgungsmoduls 1 drahtlos steuerbar und überwachbar ist.

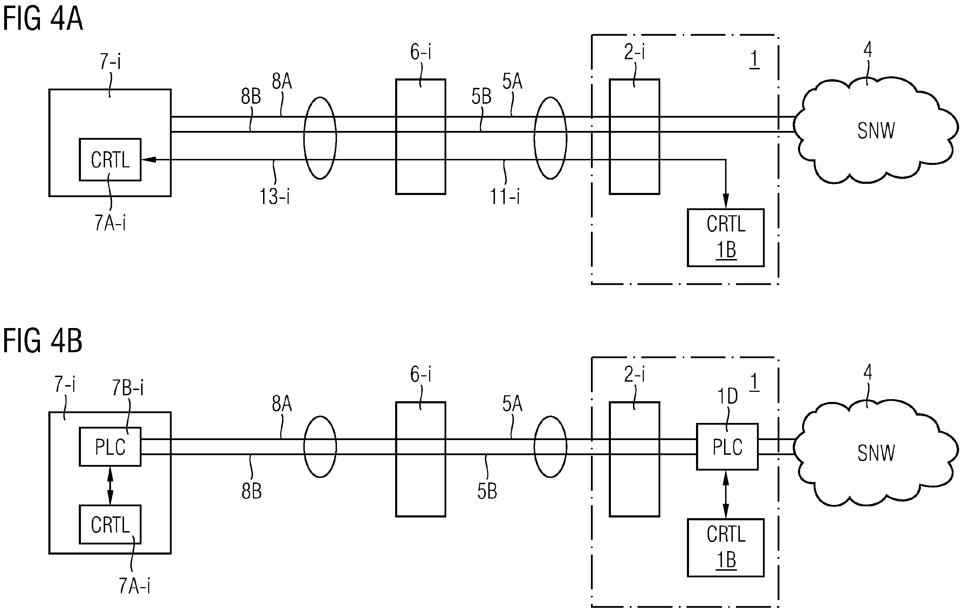

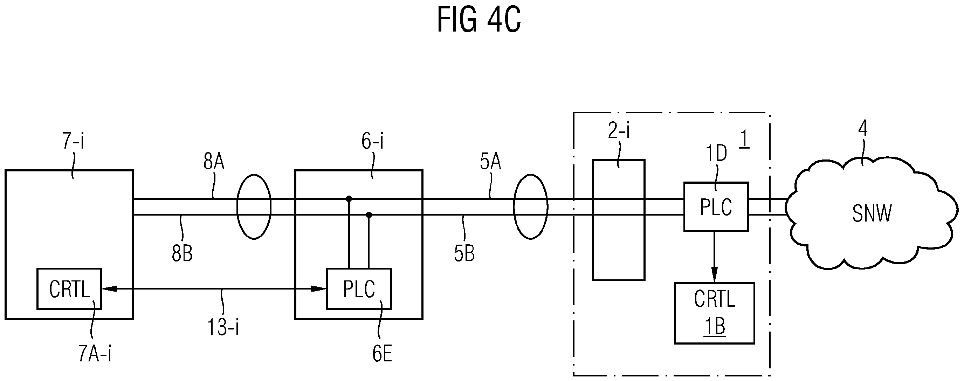

Bei einer möglichen Ausführungsform ist die identifizierte Stromsteckdose 6-i über den Versorgungsstromkreis 5-i mittels Powerline-Communication PLC durch das Stromversorgungsmodul 1 steuerbar oder überwachbar. Die Figuren 4A, 4B, 4C zeigen verschiedene Ausführungsbeispiele zur Steuerung bzw. Überwachung einer identifizierten Stromsteckdose bzw. eines daran angeschlossenen Gerätes mittels Powerline-Communication PLC.

Bei dem in Fig. 4A dargestellten Ausführungsbeispiel weist das Anschlusskabel des in die Steckdose 6-i angeschlossenen elektrischen Gerätes 7-i neben den beiden Stromversorgungsleitungen 8A, 8B zusätzlich eine Kommunikationsleitung 13-i auf, die direkt innerhalb der Stromsteckdose mit der Signalisierungsleitung 11-i verbunden ist, so dass zwischen der Steuereinrichtung 1B des Stromversorgungsmoduls 1 und einer Steuereinheit 7A-i des elektrischen Gerätes 7-i eine Kommunikationsverbindung aufgebaut werden kann. Bei dieser Ausführungsvariante ist eine Steuerung bzw. Überwachung direkt über Powerline-Communication PLC im Normalbetriebsmodus möglich. Bei dem in Fig. 4A dargestellten Ausführungsbeispiel kann die Stromsteckdose 6-iüber einen eigenen Datenanschluss verfügen, beispielsweise über einen RJ45-Datenanschluss.

Bei der in Fig. 4B dargestellten Ausführungsform verfügt sowohl das elektrische Gerät 7 als auch das Stromversorgungsmodul 1 über ein PLC-Modul. Das PLC-Modul 7B des elektrischen Gerätes 7-i kommuniziert über die Stromversorgungsleitungen 8A, 8B, 5A, 5B über die Steckdose 6-i mit dem PLC-Modul 1D des Stromversorgungsmoduls 1, wie in Fig. 4B dargestellt. An die beiden PLC-Module 7B, 1D sind jeweils Steuereinheiten 7A, 1B angeschlossen.

Bei dem in Fig. 4C dargestellten Ausführungsbeispiel verfügt die Stromsteckdose 6-i selbst über ein integriertes PLC-Modul 6E zur Kommunikation mit dem PLC-Modul 1D des Stromversorgungsmoduls 1. Das PLC-Modul 6E der Stromsteckdose 6-i tauscht die notwendigen Steuerinformationen über eine separate Datenleitung 13-i mit der Steuerung 7A des elektrischen Gerätes 7-i aus.

Bei einer möglichen Ausführungsform des erfindungsgemäßen Stromversorgungsmoduls 1 kann diese über intelligente Stromzähler verfügen. Hierbei kann der Zähler Profildaten möglicher angeschlossener elektrischer Geräte 7-i nutzen, um festzustellen, welches elektrische Gerät 7-i gerade geschaltet wurde. Dies kann beispielsweise durch Messung eines Lastprofils über einen definierten Zeitraum geschehen. Ist der jeweiligen Stromsteckdose 6-i noch keine lokale Adresse zugewiesen worden, so kann dies basierend auf dem detektierten Lastprofil realisiert werden. Hierdurch ist es auch möglich, den Anschluss eines Verbrauchers bzw. eines elektrischen Gerätes 7-i an verschiedenen Stromsteckdosen 6-i zu erkennen, wobei dies wiederum bei Bedarf eine Neuadressierung auslösen bzw. triggern kann.

Bei einer möglichen Ausführungsform ist die identifizierte Stromsteckdose 6-i drahtlos ansteuerbar. Beispielsweise kann dabei ein Bluetooth-Protokoll oder ein ZigBee-Protokoll zur Kommunikation verwendet werden.

In einem möglichen Anwendungsszenario ist an eine schaltbare Stromversorgungsvorrichtung, beispielsweise an eine schaltbare Einbaustromsteckdose bzw. Verteilerdose 6-i ein elektrisches Gerät 7-i bzw. ein elektrischer Verbraucher angeschlossen. Über eine entfernte Steuereinrichtung, beispielsweise eine Fernbedienung, ein Wandschalter oder ein Energy-Gateway kann der elektrische Verbraucher bzw. das elektrische Gerät 7-i ein- bzw. ausgeschaltet werden. Dazu wird ein Steuerbefehl drahtlos oder drahtgebunden, beispielsweise über Powerline-Communication PLC, an die steuerbare bzw. schaltbare Stromversorgungseinrichtung bzw. Stromsteckdose 6-i übertragen. Bei einer möglichen Ausführungsform können mehrere schaltbare Stromversorgungsvorrichtungen bzw. Stromsteckdosen vorgesehen sein. Es wird dann konfiguriert, bei welchem Steuerbefehl welche Stromversorgungsvorrichtung anspricht. Hierzu kann die Stromversorgungsvorrichtung bzw. Stromsteckdose 6-i mit einer Messeinheit ausgestattet sein, die einen lokalen Strombedarf ermittelt oder einen Innenwiderstand misst. Es wird dann an dem angeschlossenen Gerät 7-i beispielsweise manuell, ein Schaltvorgang durch den Nutzer vorgenommen, wobei die Änderung der Stromabnahme bzw. des Innenwiderstands durch die Stromversorgungsvorrichtung bzw. die Stromsteckdose 6-i erfasst werden kann.

Das erfindungsgemäße System erlaubt eine intuitive Auswahl eines gewünschten Elektrogerätes 7-i einfach durch Ausführen eines Schaltvorgangs. Dies schafft die Möglichkeit zu einer flexiblen und einfachen Zuordnung von Schaltvorgängen zu Schaltvorrichtungen. Es kann beispielsweise flexibel definiert werden, welche Geräte bzw. Anschlüsse durch Betätigen eines bestimmten Schalters ein- bzw. ausgeschaltet werden. Dazu ist es nicht notwendig, eine Adressierungsinformation manuell einzugeben und es muss auch keine zusätzliche Hardware für Taster oder dergleichen vorgesehen werden.

## Patentansprüche

1. Verfahren zum Steuern oder Überwachen eines elektrischen Gerätes (7), das zu seiner Stromversorgung in eine Stromsteckdose (6) einsteckbar ist, die über einen Versorgungsstromkreis (5) an einen Stromversorgungsanschluss (2) eines Stromversorgungsmoduls (1) angeschlossen ist, mit den folgenden Schritten:
(a) Identifizieren (S1) der für das elektrische Gerät (7) genutzten Stromsteckdose (6) in einem Adressanlernbetriebsmodus anhand einer an dem Stromversorgungsanschluss (2) des Stromversorgungsmoduls (1) *detektierten* Parameteränderung, welches über eine zu dem Versorgungsstromkreis (5) zugehörigen Signalisierungsverbindung (11) von der Stromsteckdose (6) zu dem Stromversorgungsanschluss (2) des Stromversorgungsmoduls (1) übertragen wird, wobei die detektierte Parameteränderung eine oder mehrere Innenwiderstandsänderungen oder Stromverbrauchsänderungen, die an dem Stromversorgungsanschluss (2) des Stromversorgungsmoduls (1) auftreten, umfasst, und
wobei die Innenwiderstandsänderung oder die Stromverbrauchsänderung an dem Stromversorgungsanschluss (2) des Stromversorgungsmoduls (1) durch mehrere Ein/Ausschaltvorgänge eines an dem elektrischen Gerät (7) angebrachten Stromschalters (10) oder durch mehrfaches Ein/Ausstecken des elektrischen Gerätes (7) in die Stromsteckdose (6) des Versorgungsstromkreises (5) hervorgerufen wird;
(b) Zuordnen (S2) einer logischen Adresse der identifizierten Stromsteckdose (6) zu dem jeweiligen Stromversorgungsanschluss (2) des Stromversorgungsmoduls (1) in dem Adressanlernbetriebsmodus;
(c) Steuern (S3) oder Überwachen des an die identifizierte Stromsteckdose (6) angeschlossenen elektrischen Gerätes (7) anhand der zugeordneten logischen Adresse der identifizierten Stromsteckdose (6) in einem normalen Betriebsmodus.

2. Verfahren nach Anspruch 1,
wobei die detektierte Parameteränderung durch das in die Stromsteckdose (6) des Versorgungsstromkreises (5) eingesteckte elektrische Gerät (7) selbst oder durch einen in die Stromsteckdose (6) des Versorgungsstromkreises eingesteckten Kodierstecker (12) hervorgerufen wird.

3. Verfahren nach Anspruch 1 oder 2,
wobei das Identifizieren der Stromsteckdose (6) und das Zuordnen der logischen Adresse der identifizierten Stromsteckdose (6) zu dem Stromversorgungsanschluss (2) des Stromversorgungsmoduls (1) in einem AdressAnlernbetriebsmodus des Stromversorgungsmoduls (1) erfolgt und wobei das Steuern oder Überwachen des an die identifizierte Stromsteckdose (6) angeschlossenen elektrischen Gerätes (7) in einem normalen Betriebsmodus des Stromversorgungsmoduls (1) erfolgt.

4. Stromversorgungsmodul (1) zur Steuerung oder Überwachung von mindestens einem elektrischen Gerät (7) gemäß dem Verfahren nach einem der Ansprüche 1 bis 3, wobei das elektrische Gerät (7) zu seiner Stromversorgung in eine Stromsteckdose (6) einsteckbar ist, die über einen Versorgungsstromkreis (5) an einen Stromversorgungsanschluss (2) des Stromversorgungsmoduls (1) angeschlossen ist,
wobei durch das Stromversorgungsmodul (1) in einem Adressanlernbetriebsmodus die Stromsteckdose (6) anhand einer an dem jeweiligen Stromversorgungsanschluss (2) auftretenden Parameteränderung, welche über eine zu dem Versorgungsstromkreis (5) zugehörige Signalisierungsverbindung (11) von der Stromsteckdose (6) zu dem Stromversorgungsanschluss (2) übertragen wird, identifiziert wird und eine logische Adresse der identifizierten Stromsteckdose (6) diesem Stromversorgungsanschluss (2) des Stromversorgungsmoduls (1) zugeordnet wird und wobei das Stromversorgungsmodul (1) in einem normalen Betriebsmodus das in die Stromsteckdose (6) eingesteckte elektrische Gerät (7) anhand der zugeordneten logischen Adresse der identifizierten Stromsteckdose (6) steuert oder überwacht; und
wobei das Stromversorgungsmodul (1) eine Messeinheit (1A) aufweist, welche eine Parameteränderung, insbesondere eine Innenwiderstandsänderung oder eine Stromverbrauchsänderung, die an einem der Stromversorgungsanschlüsse (2) des Stromversorgungsmoduls (1) auftritt, detektiert, wobei die Innenwiderstandsänderung oder die Stromverbrauchsänderung an dem Stromversorgungsanschluss (2) des Stromversorgungsmoduls (1) durch mehrere Ein/Ausschaltvorgänge eines an dem elektrischen Gerät (7) angebrachten Stromschalters (10) oder durch mehrfaches Ein/Ausstecken des elektrischen Gerätes (7) in die Stromsteckdose (6) des Versorgungsstromkreises (5) hervorgerufen wird.

5. Stromversorgungsmodul nach Anspruch 4,
wobei das Stromversorgungsmodul (1) in den Adressanlernbetriebsmodus übergeht, falls ein entsprechender Steuerbefehl durch das Stromversorgungsmodul (1) empfangen wird, und
wobei das Stromversorgungsmodul (1) von dem Adressanlernbetriebsmodus in den normalen Betriebsmodus übergeht, falls eine vorgegebene Zeitspanne in dem Adressanlernbetriebsmodus verstreicht oder
eine logische Adresse einer Stromsteckdose (6) einem Stromversorgungsanschluss des Stromversorgungsmoduls (1) zugeordnet wird oder
eine entsprechende Nutzereingabe erfolgt oder
ein entsprechender Steuerbefehl durch das Stromversorgungsmodul (1) empfangen wird.

6. Stromversorgungsmodul nach Anspruch 4 oder 5,
wobei die Steuerung oder Überwachung des an die identifizierte Stromsteckdose (6) angeschlossenen elektrischen Gerätes (7) über den Versorgungsstromkreis der identifizierten Stromsteckdose (6) oder über ein separates Datennetzwerk erfolgt, über das die identifizierte Stromsteckdose (6) des elektrischen Gerätes (7) mit dem Stromversorgungsmodul (1) kommuniziert.

7. Stromversorgungsmodul nach Anspruch 6,
wobei das Datennetzwerk ein drahtloses oder ein drahtgebundenes Datennetzwerk ist.

8. Stromversorgungsmodul nach einem der Ansprüche 4 bis 7, bei dem über einen Versorgungsstromkreis (5) an einem Stromversorgungsanschluss (2) eine Stromsteckdose (6) für ein darin einsteckbares elektrisches Gerät (7) angeschlossen ist,
wobei die Stromsteckdose (6) anhand einer in dem Versorgungsstromkreis (5) hervorgerufenen Parameteränderung durch eine Messeinrichtung (1A) des Stromversorgungsmoduls (1) identifiziert wird.

9. Stromversorgungsmodul nach Anspruch 8,
wobei die Stromsteckdose (6) ein Funkmodul (6D) aufweist, über das die identifizierte Stromsteckdose (6) durch das Stromversorgungsmodul (1) drahtlos steuerbar oder überwachbar ist.

10. Stromversorgungsmodul nach Anspruch 9,
wobei die Stromsteckdose (6) eine Schnittstelle für ein drahtgebundenes Datennetzwerk aufweist, über welches die identifizierte Stromsteckdose (6) durch das Stromversorgungsmodul (1) steuerbar oder überwachbar ist.

11. Stromversorgungsmodul nach Anspruch 9,
wobei die identifizierte Stromsteckdose (6) über den Versorgungsstromkreis mittels Powerline-Communication (PLC) durch das Stromversorgungsmodul (1) steuerbar oder überwachbar ist.

## Claims

1. Method for controlling or monitoring an electrical device (7) which, for its power supply, can be plugged into a power socket (6) which is connected to a power supply connection (2) of a power supply module (1) via a supply circuit (5), having the following steps of:
(a) identifying (S1) the power socket (6) used for the electrical device (7) in an address teaching operating mode on the basis of a parameter change which is detected at the power supply connection (2) of the power supply module (1) and is transmitted from the power socket (6) to the power supply connection (2) of the power supply module (1) via a signalling connection (11) associated with the supply circuit (5), wherein the detected parameter change comprises one or more internal resistance changes or power consumption changes which occur at the power supply connection (2) of the power supply module (1), and
wherein the internal resistance change or the power consumption change is caused at the power supply connection (2) of the power supply module (1) by a plurality of switching-on/switching-off operations of a power switch (10) fitted to the electrical device (7) or by repeatedly plugging/unplugging the electrical device (7) into and/or from the power socket (6) of the supply circuit (5);
(b) assigning (S2) a logical address of the identified power socket (6) to the respective power supply connection (2) of the power supply module (1) in the address teaching operating mode;
(c) controlling (S3) or monitoring the electrical device (7) connected to the identified power socket (6) on the basis of the assigned logical address of the identified power socket (6) in a normal operating mode.

2. Method according to Claim 1,
wherein the detected parameter change is caused by the electrical device (7) itself which is plugged into the power socket (6) of the supply circuit (5) or by a coding plug (12) which is plugged into the power socket (6) of the supply circuit.

3. Method according to Claim 1 or 2,
wherein the power socket (6) is identified and the logical address of the identified power socket (6) is assigned to the power supply connection (2) of the power supply module (1) in an address teaching operating mode of the power supply module (1), and wherein the electrical device (7) connected to the identified power socket (6) is controlled or monitored in a normal operating mode of the power supply module (1).

4. Power supply module (1) for controlling or monitoring at least one electrical device (7) in accordance with the method according to one of Claims 1 to 3, wherein the electrical device (7), for its power supply, can be plugged into a power socket (6) which is connected to a power supply connection (2) of the power supply module (1) via a supply circuit (5),
wherein the power socket (6) is identified by the power supply module (1) in an address teaching operating mode on the basis of a parameter change which occurs at the respective power supply connection (2) and is transmitted from the power socket (6) to the power supply connection (2) via a signalling connection (11) associated with the supply circuit (5), and a logical address of the identified power socket (6) is assigned to this power supply connection (2) of the power supply module (1), and wherein the power supply module (1) controls or monitors the electrical device (7) plugged into the power socket (6) in a normal operating mode on the basis of the assigned logical address of the identified power socket (6); and
wherein the power supply module (1) has a measuring unit (1A) which detects a parameter change, in particular an internal resistance change or a power consumption change, which occurs at one of the power supply connections (2) of the power supply module (1), wherein the internal resistance change or the power consumption change is caused at the power supply connection (2) of the power supply module (1) by a plurality of switching-on/switching-off operations of a power switch (10) fitted to the electrical device (7) or by repeatedly plugging/unplugging the electrical device (7) into and/or from the power socket (6) of the supply circuit (5).

5. Power supply module according to Claim 4,
wherein the power supply module (1) changes to the address teaching operating mode if a corresponding control command is received by the power supply module (1), and
wherein the power supply module (1) changes from the address teaching operating mode to the normal operating mode if a predefined period elapses in the address teaching operating mode, or
a logical address of a power socket (6) is assigned to a power supply connection of the power supply module (1), or a corresponding user input is carried out, or
a corresponding control command is received by the power supply module (1).

6. Power supply module according to Claim 4 or 5,
wherein the electrical device (7) connected to the identified power socket (6) is controlled or monitored via the supply circuit of the identified power socket (6) or via a separate data network, via which the identified power socket (6) of the electrical device (7) communicates with the power supply module (1).

7. Power supply module according to Claim 6,
wherein the data network is a wireless or wired data network.

8. Power supply module according to one of Claims 4 to 7,
in which a power socket (6) for an electrical device (7) which can be plugged into the latter is connected to a power supply connection (2) via a supply circuit (5),
wherein the power socket (6) is identified by a measuring device (1A) of the power supply module (1) on the basis of a parameter change caused in the supply circuit (5).

9. Power supply module according to Claim 8,
wherein the power socket (6) has a radio module (6D), via which the identified power socket (6) can be wirelessly controlled or monitored by the power supply module (1).

10. Power supply module according to Claim 9,
wherein the power socket (6) has an interface for a wired data network, via which the identified power socket (6) can be controlled or monitored by the power supply module (1) .

11. Power supply module according to Claim 9,
wherein the identified power socket (6) can be controlled or monitored by the power supply module (1) via the supply circuit using powerline communication (PLC).

## Revendications

1. Procédé de commande ou de surveillance d'un appareil électrique (7) qui, aux fins de son alimentation électrique, peut être enfiché dans une prise de courant (6) qui est raccordée à un raccordement d'alimentation électrique (2) d'un module d'alimentation électrique (1) via un circuit d'alimentation électrique (5), comportant les étapes suivantes :
(a) identification (S1) de la prise de courant (6) utilisée pour l'appareil électrique (7) dans un mode opérationnel d'apprentissage d'adresse à l'aide d'une modification paramétrique détectée au niveau du raccord d'alimentation électrique (2) du module d'alimentation électrique (1), transmise de la prise de courant (6) au raccord d'alimentation électrique (2) du module d'alimentation électrique (1) via une liaison de signalisation (11) associée au circuit d'alimentation électrique (5), la modification paramétrique détectée incluant une ou plusieurs modifications de résistances internes ou modifications de consommation de courant qui surviennent au niveau du raccord d'alimentation électrique (2) du module d'alimentation électrique (1) et la modification de résistance interne ou la modification de consommation de courant au niveau du raccord d'alimentation électrique (2) du module d'alimentation électrique (1) étant provoquée par plusieurs opérations d'enclenchement / de coupure d'un interrupteur (10) monté sur l'appareil électrique (7) ou par plusieurs enfichages / désenfichages de l'appareil électrique (7) au niveau de la prise de courant (6) du circuit d'alimentation électrique (5) ;
(b) affectation (S2) d'une adresse logique de la prise de courant identifiée (6) au raccord d'alimentation électrique respectif (2) du module d'alimentation électrique (1) dans le mode opérationnel d'apprentissage d'adresse ;
(c) commande (S3) ou surveillance de l'appareil électrique (7) raccordé à la prise de courant identifiée (6) à l'aide de l'adresse logique associée de la prise de courant identifiée (6) dans un mode opérationnel normal.

2. Procédé selon la revendication 1, la modification paramétrique détectée étant provoquée par l'appareil électrique lui-même (7) enfiché dans la prise de courant (6) du circuit d'alimentation électrique (5) ou par un connecteur de codage (12) enfiché dans la prise de courant (6) du circuit d'alimentation électrique.

3. Procédé selon la revendication 1 ou 2, l'identification de la prise de courant (6) et l'affectation de l'adresse logique de la prise de courant identifiée (6) au raccord d'alimentation électrique (2) du module d'alimentation électrique (1) se faisant dans un mode opérationnel d'apprentissage d'adresse du module d'alimentation électrique (1) et la commande ou la surveillance de l'appareil électrique (7) raccordé à la prise de courant identifiée (6) se faisant dans un mode opérationnel normal du module d'alimentation électrique (1).

4. Module d'alimentation électrique (1) pour la commande ou la surveillance d'au moins un appareil électrique (7) selon le procédé selon l'une des revendications 1 à 3, l'appareil électrique (7) pouvant, aux fins de son alimentation électrique, être enfiché dans une prise de courant (6) qui est raccordée à un raccordement d'alimentation électrique (2) du module d'alimentation électrique (1) via un circuit d'alimentation électrique (5),
le module d'alimentation électrique (1) identifiant la prise de courant (6) dans un mode opérationnel d'apprentissage d'adresse à l'aide d'une modification paramétrique survenant au niveau du raccord d'alimentation électrique respectif (2), transmise de la prise de courant (6) au raccord d'alimentation électrique (2) via une liaison de signalisation (11) associée au circuit d'alimentation électrique (5), et une adresse logique de la prise de courant identifiée (6) étant affectée à ce raccord d'alimentation électrique respectif (2) du module d'alimentation électrique (1) et le module d'alimentation électrique (1) commandant ou surveillant l'appareil électrique (7) enfiché dans la prise de courant (6) dans un mode opérationnel normal à l'aide de l'adresse logique associée de la prise de courant identifiée (6) et
le module d'alimentation électrique (1) comportant une unité de mesure (1A) qui détecte une modification paramétrique, et plus particulièrement une modification de résistance interne ou une modification de consommation de courant survenant au niveau d'un des raccords d'alimentation électrique (2) du module d'alimentation électrique (1), la modification de résistance interne ou la modification de consommation de courant au niveau du raccord d'alimentation électrique (2) du module d'alimentation électrique (1) étant provoquée par plusieurs opérations d'enclenchement / de coupure d'un interrupteur (10) monté sur l'appareil électrique (7) ou par plusieurs enfichages / désenfichages de l'appareil électrique (7) au niveau de la prise de courant (6) du circuit d'alimentation électrique (5).

5. Module d'alimentation électrique selon la revendication 4, le module d'alimentation électrique (1) passant en mode opérationnel d'apprentissage d'adresse si un ordre de commande correspondant est reçu par le module d'alimentation électrique (1) et le module d'alimentation électrique (1) passant du mode opérationnel d'apprentissage d'adresse au mode opérationnel normal si un laps de temps donné s'écoule en mode opérationnel d'apprentissage d'adresse ou une adresse logique d'une prise de courant (6) étant affectée à un raccordement d'alimentation électrique du module d'alimentation électrique (1) ou une entrée utilisateur correspondante ayant lieu ou un ordre de commande correspondant étant reçu par le module d'alimentation électrique (1).

6. Module d'alimentation électrique selon la revendication 4 ou 5, la commande ou la surveillance de l'appareil électrique (7) raccordé à la prise de courant identifiée (6) ayant lieu via le circuit d'alimentation électrique de la prise de courant identifiée (6) ou via un réseau de données séparé via lequel la prise de courant identifiée (6) de l'appareil électrique (7) communique avec le module d'alimentation électrique (1).

7. Module d'alimentation électrique selon la revendication 6, le réseau de données étant un réseau de données sans fil ou filaire.

8. Module d'alimentation électrique selon l'une des revendications 4 à 7, dans lequel est raccordée à un raccord d'alimentation électrique (2), via un circuit d'alimentation électrique (5), une prise de courant (6) pour un appareil électrique (7) pouvant y être enfiché, la prise de courant (6) étant identifiée par un dispositif de mesure (1A) du module d'alimentation électrique (1) à l'aide d'une modification paramétrique provoquée dans le circuit d'alimentation électrique (5).

9. Module d'alimentation électrique selon la revendication 8, la prise de courant (6) comportant un module radio (6D) via lequel la prise de courant identifiée (6) peut être commandée sans fil ou surveillée par le module d'alimentation électrique (1).

10. Module d'alimentation électrique selon la revendication 9, la prise de courant (6) présentant une interface pour un réseau de données filaire via lequel la prise de courant identifiée (6) peut être commandée ou surveillée par le module d'alimentation électrique (1).

11. Module d'alimentation électrique selon la revendication 8, la prise de courant identifiée (6) pouvant être commandée ou surveillée par le module d'alimentation électrique (1) via le circuit d'alimentation électrique au moyen d'une communication Powerline (PLC).
